# EUROPEAN PATENT APPLICATION

(11) **EP 0 768 598 A1**
(43) Date of publication of application: **16.04.1997**
(21) Application number: 96307325.9
(22) Date of filing: 09.10.1996
(51) Int. Cl.: G06F 3/023, G06F 3/02

(54) **Ergonomic keyboard with sensory alerting to prevent human injury**

(30) Priority: 16.10.1995 US 543639
(71) Applicant: AT&T Corp., New York, NY 10013-2412 (US)
(72) Inventor: Byrne, Kevin P., Westminster, Colorado 80234 (US)
(74) Representative: Buckley, Christopher Simon Thirsk

(57) **Abstract**

If the pressure that an operator exerts on individual keys of a keyboard is excessive the operator is immediately alerted. In a first embodiment, the keyboard alerts the operator to excessive pressure by means of an audio alarm. In a second embodiment, the keyboard transmits the pressure information to a connected computer. The computer can alert the operator with an audio message or alert the operator by displaying the alerting information on the computer screen being utilized by the operator. By alerting the user in these manners, the operator is provided feedback that is immediate and consistent. This allows the operator to modify their behavior so that they no longer misuse the keyboard by striking the keys hard. Where an operator only strikes certain keys with excessive force, the connected computer is responsive to the key pressure information to maintain statistics indicating which keys have been excessively struck in order to assist the operator in correcting the problem of striking the keys too hard.

## Description

### Technical Field

This invention relates to keyboards used for display entry, and, in particular, to a keyboard that alerts the operator when misuse of the keyboard may injure the operator over time.

### Background of the Invention

With the large increase in keyboard use with personal computers or video data terminals, there has been a dramatic 70% rise in cumulative trauma disorders (CTD) in the past five years. There were 302,000 reported cases of cumulative trauma disorder reported in 1993. These disorders now account for approximately 80% of all workers' compensation claims, according to the National Institute for Occupational Safety and Health. Each worker's compensation claim can amount to a few thousands of dollars to millions of dollars. In addition, cumulative trauma disorders result in a large amount of work time being lost. For example, the average number of lost work days for cumulative trauma disorders is 20 days as compared to an average of six days of lost work days for all other occupational illnesses and injuries combined. Further, not only just the fingers are involved but also the thumbs. A common form of occupational tendonitis of the thumb, DeQuervain's tendonitis, can be caused by excessive force downward by the thumbs and can also be caused by excessive pinching, lateral striking of the thumb, as in typing. Also, the occurrence of cumulative trauma disorders is going to increase since the projected use of keyboards with visual displays is one hundred million in the United States by the year 2000.

The prior art has attempted to solve the rapid increase of cumulative trauma disorders by developing new ergonomically correct work environment, by redesigning the keys, and by redesigning the layout of the keyboard itself. Whereas, the effort in the prior art to redesign the work environment and the layout of keyboards has helped, the prior art has not addressed an important cause of cumulative trauma disorder which is that many keyboard operators strike the keys on the keyboard too hard. By redesigning certain key parameters such as peak tactile point and total key travel, the prior art has attempted to reduce the force used by operators to strike keys. The paper entitled "Keyboard Force, Fatigue and Pain in Symptomatic and Asymptomatic Wordprocessors", by M. Feuerstein, et al., presented at the 12th Congress of the International Ergonomics Association, Toronto, Canada, August 15-19, 1994, reports the effects of operators striking keys too hard. The paper entitled "Fingertip Forces While Using Three Different Keyboards", by D. Rempel, et al., Proceedings of 1991 Human Factors Society 35th Annual Meeting, San Francisco, United States, discloses the use of force measurements to assist in the design of keys for keyboards having optimal peak tactile point and total key travel parameters to reduce excessive striking force.

The resulting repetitive impact and sustained muscle contractions caused by striking keys too hard can result in the occurrence of cumulative trauma disorders. Even after operators are informed that they are striking the keyboard too hard, the operators still continue to do so, often due to stress or habit. Hence, there exists a need in the prior art for a mechanism to monitor the force at which a keyboard operator strikes the keys on a keyboard and to give immediate feedback of excessive force.

### Summary of the Invention

The foregoing problem is solved, and a technical advance in the art is achieved by a keyboard that determines the pressure that an operator exerts on individual keys of the keyboard and alerts the operator if the pressure is excessive. In a first embodiment, the keyboard alerts the operator to excessive pressure by means of an audio alarm. In a second embodiment, the keyboard transmits the pressure information to a connected computer. The computer can advantageously alert the operator with an audio message or alert the operator by displaying the alerting information on the computer screen being utilized by the operator. By alerting the user in these manners, the operator is provided feedback that is immediate and consistent. This allows the operator to modify their behavior so that they no longer misuse the keyboard by striking the keys hard.

In addition, an operator may only strike certain keys with excessive force. In the second embodiment, the connected computer is responsive to the key pressure information to maintain statistics indicating which keys are struck excessively hard. The operator can then access the statistics in order to assist the operator in correcting the problem of striking the keys too hard.

These and other advantages and features of the invention will become apparent from the following description of illustrative embodiments of the invention taken together with the drawing.

### Brief Description of the Drawing

FIG. 1 illustrates, in block diagram form, one illustrative embodiment of a keyboard in accordance with the invention;
FIG. 2 illustrates, in greater detail, the construction of one key of a keyboard matrix;
FIG. 3 illustrates in greater detail the interconnection of amplifiers and pressure sensors;
FIG. 4 illustrates, in block diagram form, another illustrative embodiment of a keyboard in accordance with the invention;
FIG. 5 illustrates, in greater detail, the construction of one key of a keyboard matrix;
FIG. 6 illustrates, in greater detail, the construction of one key of a keyboard matrix;
FIG. 7 illustrates, greater detail, the connection of a keyboard to a personal computer;
FIG. 8 illustrates a message displayed on a computer display;
FIG. 9 illustrates, in block diagram form, another embodiment for connecting a keyboard to a personal computer;
FIG. 10 illustrates the operations performed by a program being executed by a microcomputer of FIG. 1;
FIG. 11 illustrates the operations of a program executing in a microcomputer of the keyboard of FIG. 4;
FIG. 12 illustrates a program being executed by the microcomputer of FIG. 9; and
FIG. 13 illustrates a program executed by a personal computer of FIGS. 7 and 9.

### Detailed Description

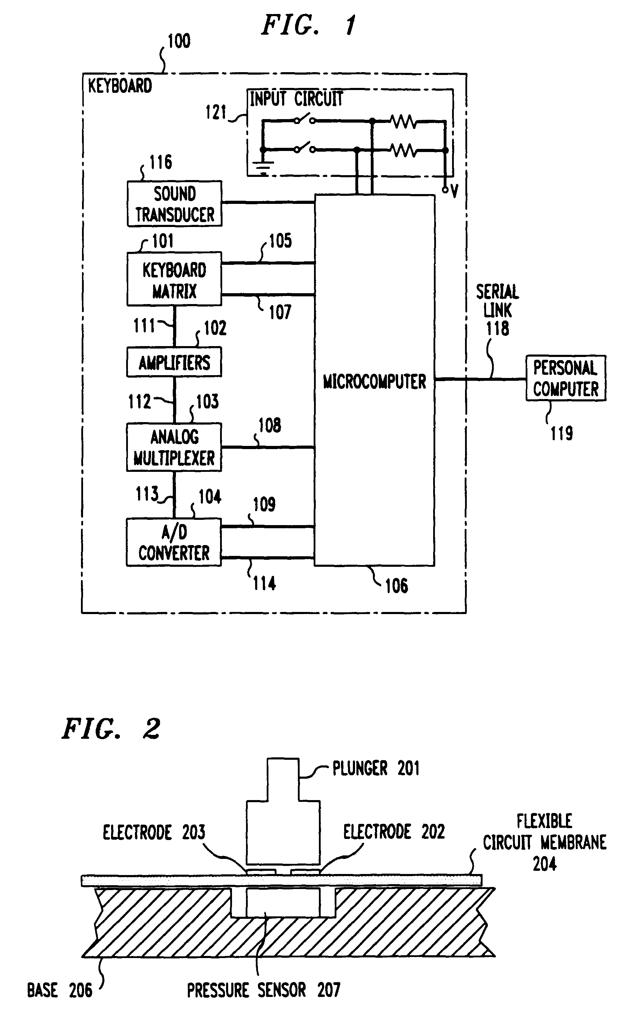

FIG. 1 illustrates a first embodiment of the invention.
Microcomputer 106 supplies the control functions for keyboard 100 as well as interfacing to a personal computer via serial link 118. The keys on keyboard matrix 101 are arranged in a standard personal computer configuration. For detection of which key has been actuated, the keys are connected in an XY matrix. Microcomputer 106 transmits signals via bus 105 to scan this matrix and read the results via bus 107. The identification of the actuated key is transmitted via serial link 118 to personal computer 119. This arrangement of keys and scanning of these keys in this manner is well known in the art and is commonly used. For example, the keyboard used with the AT&T 6300 personal computer has such a keyboard matrix controlled by a microcomputer.

FIG. 2 illustrates in greater detail a key position of keyboard matrix 101. Electrodes 202 and 203 are interconnected to X and Y conductors of the XY matrix on flexible circuit membrane 204. When a key is actuated on keyboard matrix 101, microcomputer 106 detects this actuation by the transmission of signals on bus 105 and reading the results on bus 107. In addition, when a key is actuated on keyboard matrix 101, an output signal indicating the pressure placed on the individual key is transmitted as a signal on bus 111 to amplifiers block 102 by keyboard matrix 101. Block 102 amplifies received pressure signals from pressure sensors located under each key of keyboard matrix 101 and transmits the resulting amplified signals on bus 112 to analog multiplexor 103. Microcomputer 106 is responsive to the identification of the actuated key received on bus 107 to select the amplified pressure signal for the actuated key by transmitting addressing information on bus 108 to analog multiplexor 103. Analog multiplexor 103 is responsive to the address information received on bus 108 to transmit the selected amplified signal on conductor 113 to analog-to-digital (A/D) converter 104. At the appropriate time, microcomputer 106 instructs A/D converter 104 to convert the analog signal being received on conductor 113 to a digital value and to transmit the digital value to microcomputer 106 via bus 114. Using the received digital value from A/D converter 104, microcomputer 106 computes the pressure exerted on the actuated key. If this computed pressure exceeds a predefined threshold, microcomputer 106 alerts the operator of keyboard 100 by actuating sound transducer 116. The predefined threshold is determined by the setting of the switches in input circuit 121 or may be downloaded from personal computer 119 via serial link 118. The predefined threshold is advantageously a pressure of 100 grams.

FIG. 2 illustrates in detail a key of keyboard matrix 101. The mechanical support to support plunger 201 in position as well as the key cap is not illustrated. Plugger 201 has a conductive surface on the surface that makes contact with electrodes 202 and 203. Electrode 202 is connected to the X lines of the matrix on flexible circuit membrane 204, and electrode 203 is connected to the Y lines of the matrix. When the switch is activated, plunger 201 moves downward and makes contact with electrodes 202 and 203. Since the surface making contact with the electrodes is conductive, electrodes 202 and 203 are now connected together. This connection is detected by microcomputer 106 by the transmission of signals on bus 105 and receiving the resulting signals on bus 107 of FIG. 1. As plunger 201 moves downward after making initial contact with electrodes 202 and 203, the pressure being exerted on plunger 201 is detected by pressure sensor 207 since flexible circuit membrane 204 will flex exerting pressure on pressure sensor 207. Pressure sensor 207 generates an electric signal in proportion to the applied pressure. Pressure sensor 207 may advantageously be a piezo-electric type transducer. Alternatively, a strain gauge or other type transducers may also be employed. There is one pressure sensor for each key on keyboard matrix 101.

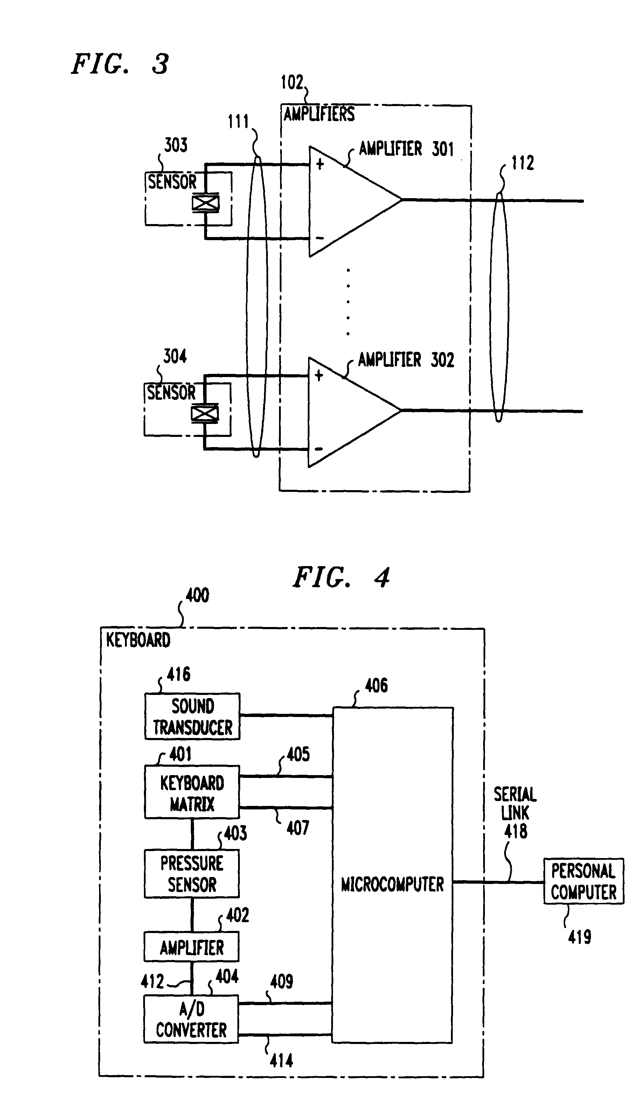

With respect to FIG. 1, each pressure sensor is connected to an individual amplifier in amplifiers block 102. FIG. 3 illustrates in greater detail the interconnection of pressure sensors to amplifiers in amplifiers block 102. As illustrated in FIG. 3, each sensor is connected to an individual amplifier, and the output of each amplifier is connected via bus 113 to analog multiplexor 103. Analog multiplexor 103 in response to addressing information received from microcomputer 106 via bus 108 is responsive to the analog inputs received on bus 112 to select one of these inputs for transmission on conductor 113. One skilled in the art could readily envision that the outputs of the sensors such as sensor 303 and 304 could be placed on a common bus before being amplified since only one sensor at a time is generating an electrical signal. In addition, one skilled in the art could envision that an analog multiplexor could be utilized between groups of sensors and a single amplifier.

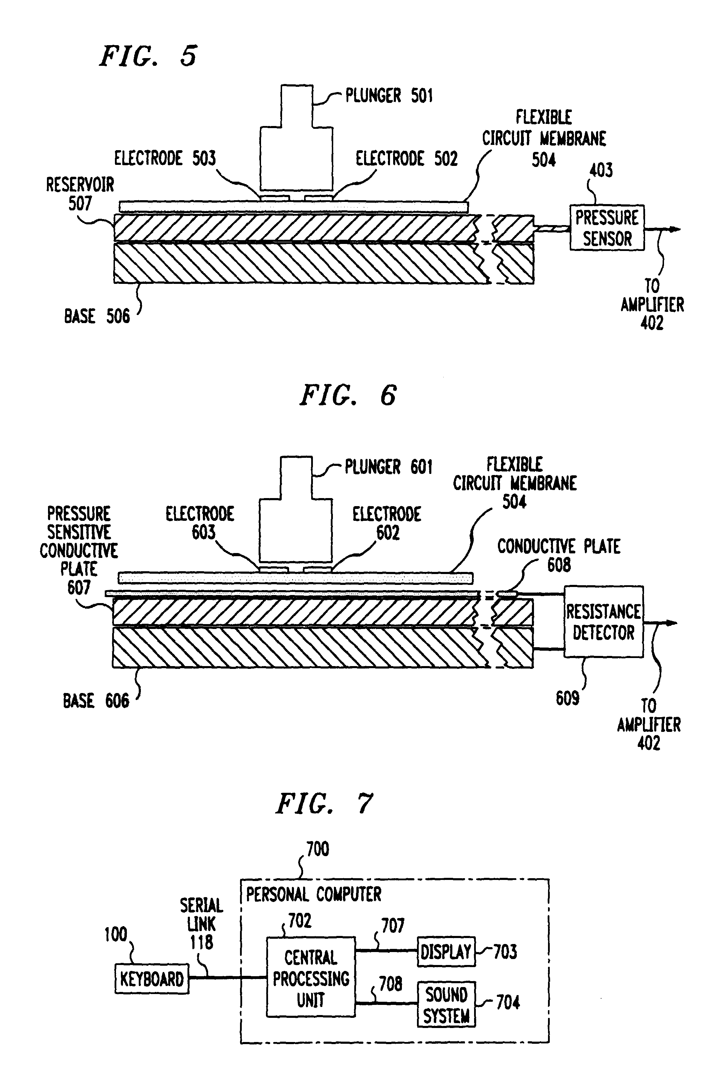

FIG. 4 illustrates another embodiment in keyboard 400. In keyboard 400, only one pressure sensor, pressure sensor 403, is required. The output of pressure sensor 403 is amplified by amplifier 402 for transmission on conductor 412 to A/D converter 404. As with keyboard 100, microcomputer 406 scans keyboard matrix 401 by transmission of signals on bus 405 and receiving the resulting signals of bus 407. When microcomputer 406 detects the actuation of a key, microcomputer 406 signals A/D converter 404 via conductor 409 to convert the analog signal being received on conductor 412 to a digital value and to transmit the digital value on bus 414 to microcomputer 406. From the transmitted digital value, microcomputer 406 computes a pressure value. If the computed pressure value exceeds a predetermined value, microcomputer 406 alerts the operator by actuating sound transducer 416 to emit an audio signal. In addition, microcomputer 406 transmits the identity of the actuated key via serial link 418 to personal computer 419.

FIG. 5 illustrates a portion of keyboard matrix 401 of FIG. 4. The operation of plunger 501 with respect to electrodes 502 and 503 of flexible circuit membrane 504 is the same as that described for FIG. 2. When plunger 501 moves downward making contact with electrode 502 and 503, flexible circuit membrane 504 flexes putting pressure on reservoir 507. Reservoir 507 is a flexible container containing a non-compressible liquid. Pressure sensor 403 is connected to reservoir 507 via a connecting tube that allows the liquid of reservoir 507 to exert pressure on pressure sensor 403. In this manner, the pressure exerted by plunger 501 via flexible circuit membrane 504 on reservoir 507 is transmitted to pressure sensor 403.

An alternate embodiment keyboard matrix 401 is illustrated in FIG. 6. In FIG. 6, pressure synthesizer 403 is replaced with resistance detector 609. Both conductive plate 608 and base 606 conduct electricity at a low resistance. Pressure sensitive conductive plate 607 varies its resistance in response to the amount of pressure that is applied. As greater pressure is applied, the resistance of pressure sensitive conductive plate 607 varies at the point at which the pressure is being applied. This change in resistance is measured by resistance detector 609. As plunger 601 is pressed down onto electrodes 602 and 603, flexible circuit membrane 604 flexes and applies pressure onto conductive plate 608 which is also a flexible material. The result is that pressure is applied to pressure sensitive conductive plate 607. The resistance of plate 607 starts to decrease as pressure is applied. This change in resistance as determined by resistance detector 609 is transmitted as a voltage to amplifier 402. A/D converter 404 is responsive to the output of amplifier 402 to transmit a digital value via bus 414 to microcomputer 406. Microcomputer 406 is responsive to the digital value to determine if an audio signal is to be produced by sound transducer 416.

One skilled in the art could readily see that A/D converter 404 could be replaced with a simple threshold detector if only one pressure threshold was used for all operators. The threshold detector would transmit a true signal to microcomputer 406 if the pressure exceeded the predefined amount or a false signal if the pressure did not exceed the predefined amount.

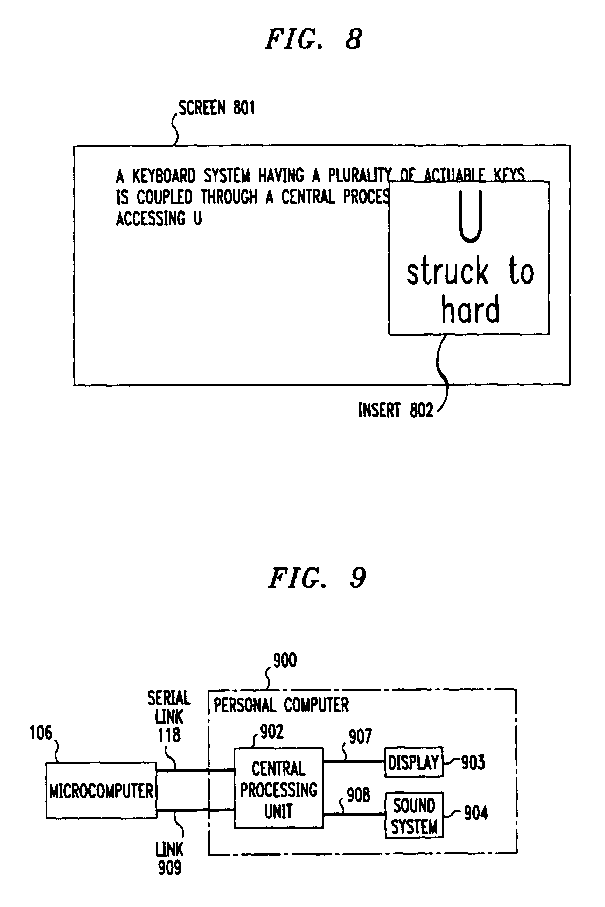

FIG.7 illustrates another embodiment of the invention. In FIG. 7, keyboard 100 is identical to that illustrated in FIG. 1; however, microcomputer 106 is responsive to the digital value received from A/D converter 104 via bus 114 to compute the pressure that is being applied to the actuated key on keyboard matrix 101 but transmits this computed pressure value to personal computer 700 via serial link 118. Sound transducer 116 of FIG. 1 is not present in this implementation of keyboard 100 as illustrated on FIG. 7. Keyboard 400 of FIG. 4 could be similarly modified to be used in place of keyboard 100. Central processing unit 702 is responsive to the computed pressure value to determine if this value exceeds a predefined limit. Central processing unit 702 determines if the operator should be alerted. If the operator should be alerted, central processing unit 702 can visually alert the operator by displaying a message on display 703 or by using an audio message via sound system 704. In addition, central processing unit 702 maintains statistics that define the number of times a given key was struck with too much force. If an audio message is utilized, this message can be a synthesized voice message informing the operator of the problem or can be an alarm sound such as a bell or siren.

FIG. 8 illustrates one type of textual message that may be utilized by central processing unit 702. FIG. 8 shows screen 801 which is displayed on display 703. When the operator struck the "u" key too hard, insert 802 was displayed on screen 801 to inform the operator that the "u" had been struck too hard. As can be seen from FIG. 8, insert 802 overlies text that is being typed by the operator so as to attract the operator's attention. Insert 802 remains on screen 801 for some predefined period of time.

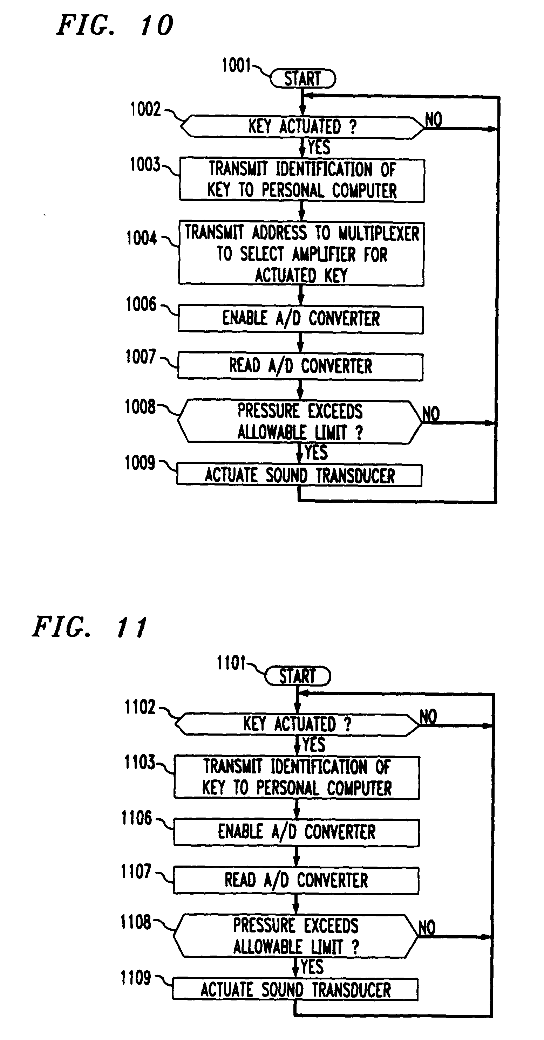

In FIG. 7, the pressure values can be transmitted from microcomputer 106 in keyboard 100 in one of three ways. First, microcomputer 106 transmits three characters each time a key is actuated. The first character denotes the transmission of information from the keyboard and advantageously is the null character. The second character is the normalized pressure value which is never be all zero which is a null character. Finally, the third character transmitted is the actual character that represented the key that had been actuated. The second way of transmitting information from keyboard 100 to central processor unit 702 in FIG. 7 is to utilize the fact that serial link 118 is a bilateral serial link capable of transmitting characters in either direction. The details of the protocol that is used on serial link 118 is set forth in the article by E. Nisley, entitled "How The PCT Keyboard Got Its Bits", Circuit Cellar Inc., issue 59, June 1995. Also, information concerning serial link 118 is set forth in Technical Reference No. 68X2224, IBM, First Edition (April 1987), pp. 6-3 through 6-43. Utilizing these two references, one skilled in the art could readily determine how to transmit not only the identification of the key actuated on keyboard 100 but also the pressure that had been applied to that keyboard. Further, one skilled in the art would readily see how information could be transferred from central processor unit 702 to microcomputer 106 in keyboard 100 to update the program running in microcomputer 106 as well as setting various parameters. With a standard keyboard, central processor unit 702 already transmits information during the initialization of the keyboard. Finally, the third way of transferring information to and from microcomputer 106 is illustrated in FIG. 9. In FIG. 9, blocks 900-908 perform the same functions as blocks 700-708 of FIG. 8. In FIG. 9, link 909 has been added between microcomputer 106 and central processing unit 902. Link 909 could be a serial or a parallel link. Advantageously, it is a serial link implementing the RS 232 protocol so that a standard interface on central processing unit 902 can be utilized. Using link 909, information is transferred bilaterally between microcomputer 106 and central processing unit 902.

FIG. 10 illustrates the program executed by microcomputer 106 of FIG. 1. Once microcomputer 106 has been initiated by execution of block 1001, decision block 1002 determines if a key has been actuated on keyboard matrix 101. If the answer is no, decision block 1002 is reexecuted. If the answer is yes in decision block 1002, block 1003 transmits the identification of the actuated key to personal computer 119 via serial link 118. Next, block 1004 transmits the address that will select the amplifier which is receiving the output of the pressure transducer of the actuated key. Block 1006 enables A/D converter 104 after a predefined amount of time. Block 1007 reads the output of A/D converter 1004 via bus 114. Decision block 1008 determines if the pressure represented by the value read from bus 114 exceeds the allowable limit which is obtained by input circuit 121. If the answer is yes, block 1009 actuates sound transducer 116 for a predefined amount of time and transfers control back to decision block 1002. If the answer in decision block 1008 is no, control is transferred back to decision block 1002.

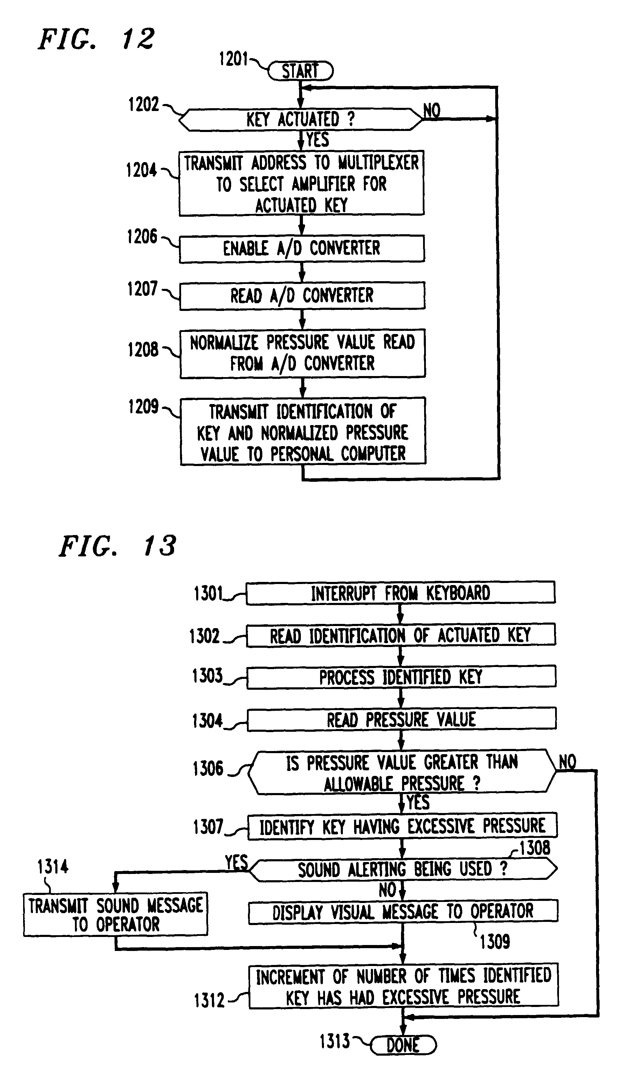

FIG. 11 illustrates the operations performed by the program running in microcomputer 106 of FIG. 4. Blocks 1101 through 1109 are identical in operations to blocks 1001 through 1009, respectively. However, there is no equivalent of block 1004 in FIG. 11. The reason is that only one transducer is utilized to measure the pressure of a key actuated on keyboard matrix 401; hence, it is not necessary to select an amplifier since there is only amplifier 402.

FIG. 12 illustrates the operations of a program being executed in a microcomputer in keyboard 100 of FIG. 7. Keyboard 100 of FIG. 7 is assumed to be identical to the keyboard illustrated in FIG. 1 with the exception that there is no sound transducer 116. The program is initialized by block 1201 transferring control to block 1202 which determines if a key has been actuated on keyboard matrix 101. If the answer is no, decision block 1202 is reexecuted. If the answer is yes in decision block 1202, block 1204 transmits an address to analog multiplexer 103 to read the amplified signal of the transducer of the actuated key. Block 1206 enables A/D converter 104, and block 1207 reads the output of A/D converter 104 via bus 114. Block 1208 normalizes the pressure value read from A/D converter 104 so as to occupy only one byte and so as not to have a zero value. Block 1209 then transmits the identification of the actuated key and the normalized pressure value to personal computer 700 of FIG. 7.

FIG. 13 illustrates the operations performed by a program executing in personal computer 700 of FIG. 7 or personal computer 900 of FIG. 9. The operations will be described with respect to FIG. 9 but the description is equally applicable to FIG. 7. When microcomputer 106 of FIG. 9 transmits the identification of the actuated key and the pressure value to central processing unit 902, an interrupt results. Block 1301 is responsive to the interrupt to transfer control to block 1302 which reads the identification of the actuated key. Block 1303 then processes the identified key in the manner required by the program that is presently utilizing the keyboard within central processing unit 902. Block 1304 reads the pressure value and decision block 1306 determines if the read pressure value is greater than the allowable pressure. If the answer is no, processing of this identified key is terminated by execution of block 1313. If the answer in decision block 1306 is yes, the key is further identified with respect to its textual identification. Decision block 1308 determines if sound alerting is being used. If the answer is yes, a sound message is transmitted to the operator by execution of block 1314 via sound system 904. If a voice synthesizer is being utilized in sound system 904, the textual identification of the actuated key is utilized in a voice message to the operator. After execution of block 1314, block 1312 increments the counter that defines the number of times that the actuated key has been found to have excessive pressure being applied to it. If the answer in decision block 1308 is no, then block 1309 displays a visual message to the operator such as that illustrated in FIG. 8.

## Claims

1. A method for alerting immediately an operator of excessive pressure being applied to keys of a keyboard (400), comprising:
CHARACTERIZED IN THAT
determining pressure (402-406) exerted on a key by the operator; and
generating (1306-1314) a message to alert immediately an operator of the keyboard upon the determined pressure exceeding a predefined pressure.

2. The method of claim 1 wherein the step of determining pressure comprises a plurality of transducers each located with an individual key and responsive to the pressure applied to the individual key to generate a signal representative of the applied pressure.

3. The method of claim 2 further comprises the step of adjusting (1304) the predefined pressure.

4. The method of claim 2 wherein the step of determining pressure further comprises the step of reading (1204-1208) the signal representative of the applied pressure from the transducer located with the key in response to the actuation of the key; and
transmitting (1209) the read signal to the step of generating.

5. The method of claim 1 wherein the step of determining pressure comprises one transducer responsive to pressure applied to all keys to generate a signal representative of the applied pressure.

6. The method of claim 5 further comprises the step of adjusting the predefined pressure.

7. The method of claim 5 wherein the step of determining pressure further comprises the step of reading (1204-1208) the signal representative of the applied pressure from the transducer in response to the actuation of the key; and
transmitting (1209) the read signal to the step of generating.

8. An apparatus for alerting immediately an operator of excessive pressure being applied to keys of a keyboard (400), comprising:
CHARACTERIZED IN THAT
means (402-406) for determining pressure exerted on a key by the operator; and
means (1306-1314) for generating a message to alert immediately an operator of the keyboard upon the determined pressure exceeding a predefined pressure.

9. The apparatus of claim 8 wherein the means for determining pressure comprises a plurality of transducers each located with an individual key and responsive to the pressure applied to the individual key to generate a signal representative of the applied pressure.

10. The apparatus of claim 9 further comprises means (1304) for adjusting the predefined pressure.

11. The apparatus of claim 9 wherein the means for determining pressure further comprises means (1204-1208) responsive to the actuation of the key for reading the signal representative of the applied pressure from the transducer located with the key; and
means (1209) for transmitting the read signal to the means for generating.

12. The apparatus of claim 8 wherein the means for determining pressure comprises one transducer responsive to pressure applied to all keys to generate a signal representative of the applied pressure.

13. The apparatus of claim 12 further comprises means for adjusting the predefined pressure.

14. The apparatus of claim 12 wherein the means for determining pressure further comprises means responsive to the actuation of the key for reading the signal representative of the applied pressure from the transducer; and
means for transmitting the read signal to the means for generating.
